# EUROPÄISCHE PATENTSCHRIFT

(11) **EP 1 636 521 B1**
(45) Veröffentlichungstag und Bekanntmachung des Hinweises auf die Patenterteilung: **02.04.2008**
(21) Anmeldenummer: 04730492.8
(22) Anmeldetag: 30.04.2004
(51) Int. Cl.: F16L 37/092, F16L 33/22

(54) **VERBINDUNGSEINRICHTUNG FÜR EIN ROHR ODER DGL**
CONNECTING DEVICE FOR A PIPE OR SIMILAR
DISPOSITIF DE RACCORDEMENT POUR UN TUYAU OU UN ELEMENT SIMILAIRE

(30) Priorität: 23.06.2003 DE 20309704 U; 25.06.2003 DE 20309922 U
(43) Veröffentlichungstag der Anmeldung: 22.03.2006
(73) Patentinhaber: Lincoln GmbH, 69190 Walldorf (DE)
(72) Erfinder: PALUNCIC, Zdravko, 67067 Ludwigshafen (DE)
(74) Vertreter: Keil, Rainer A.
(86) Internationale Anmeldenummer: PCT/EP2004/004586
(87) Internationale Veröffentlichungsnummer: WO 2005/001326

(56) Entgegenhaltungen:
- EP-A- 1 143 185
- WO-A-87/05087
- GB-A- 2 165 604
- US-A- 5 125 694
- US-A- 5 549 865

## Beschreibung

Die Erfindung bezieht sich auf eine Verbindungseinrichtung für ein Rohr oder dgl. Fluidleitung, mit einem Kupplungskörper und einer Klemmhülse, welche in eine im Wesentlichen zylindrische Aussparung des Kupplungskörpers in eine axial innere Ausgangslage einsetzbar und in welche, z. B. nach dem Einsetzen in die Aussparung, ein Ende des anzuschließenden Rohres, z. B. bis zu einem stirnseitigen Anschlag des Kupplungskörpers, einschiebbar ist, wobei die Klemmhülse an ihrem inneren Ende wenigstens eine radial verlagerbare Arretierungszunge aufweist, welche bei einem Zurückschieben des Rohres und damit der Klemmhülse in Richtung des Aussparungseingangs z. B. unter dem sich in der Rohrkupplung aufbauenden Druck bis in eine axial äußere Arretierungslage durch Zusammenwirken der Außenseite der Arretierungszunge mit einer ersten, in Richtung des Aussparungseingangs radial abfallenden Schräge der Innenwandfläche des Kupplungskörpers radial nach innen und mit ihrer Innenseite in Eingriff mit der Außenwandfläche des Rohres drückbar ist. Auf diese Weise ist einfach und schnell eine Steckverbindung zwischen dem Rohr oder dgl. Fluidleitung herstellbar und auch wieder lösbar.

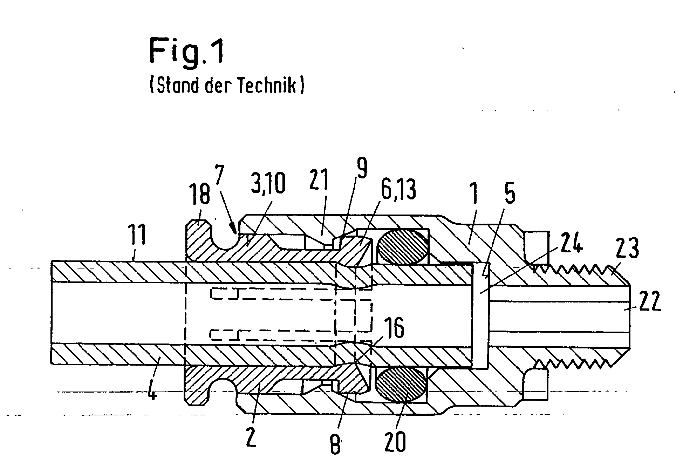

Eine derartige handelsübliche Verbindungseinrichtung ist in Fig. 1 im Schnitt dargestellt. Um die Dichtheit zwischen Verbindungseinrichtungen herzustellen, ist in der Aussparung des Kupplungskörpers stirnseitig des inneren Endes der Klemmhülse zwischen der Außenwandfläche des Rohres und der Innenwandfläche des Kupplungskörpers eine O-Ring-Dichtung vorgesehen. Zum Lösen der Steckverbindung kann die Klemmhülse z. B. mit Hilfe eines außen liegenden Flansches aus der in Fig. 1 dargestellten axial äußere Arretierungslage weiter in die Aussparung des Kupplungskörpers bis in ihre axial innere Ausgangslage eingeschoben werden, wodurch sich die Arretierungszungen der Klemmhülse aus ihrer radial nach innen gedrückten Stellung aufgrund des Zusammenwirkens mit dem Dichtungsring und ggf. der eigenen Rückstellkraft aufspreizen und das Rohrende wieder freigeben kann. Es hat sich gezeigt, dass einerseits in die Spalten zwischen Rohrende und Klemmhülse sowie zwischen Klemmhülse und Kupplungskörper von außen Feuchtigkeit und Schmutz eindringen kann, was das Lösen der Steckverbindung erschwert, und andererseits beim Herstellen und Lösen der Steckverbindung Kratzer und dgl. Beschädigungen in der Außenwandfläche des Rohrende entstehen, wodurch Undichtigkeiten unter dem in der Verbindungseinrichtung herrschenden Fluiddruck entstehen. In Erkenntnis dieser in der Praxis auftretenden Problemen lag es nahe, einerseits das Rohr-ende gegenüber der Klemmhülse und andererseits die Klemmhülse gegenüber dem Kupplungskörper benachbart dem Aussparungseingang zusätzlich abzudichten, wie es in der EP 1 143 185 A1 mit Hilfe zweier O-Ring-Dichtungen auch vorgeschlagen worden ist, von welcher eine zwischen Klemmhülse und Innenwandfläche des Kupplungskörpers und eine zwischen Klemmhülse und Außenwandfläche des Rohres vorgesehen ist. Eine ähnliche Kupplung ist auch aus der GB 2 165 604 A bekannt.

Ein Problem ist jedoch nach wie vor das zuverlässige Aufspreizen der Arretierungszungen beim Einschieben der Klemmhülse aus der in Fig. 1 dargestellten Arretierungslage, weil einerseits die Nachgiebigkeit des stirnseitig der Klemmhülse vorhandenen auch alternden Dichtringes und andererseits bei zu geringer Federelastizität die eigene Rückstellkraft der Federzungen keine hinreichende Ausspreizkraft gewährleisten.

Weiter wird es bei der Verbindungseinrichtung gemäß EP 1 143 185 A1 als nachteilig empfunden, dass neben der stirnseitig vor der Klemmhülse liegenden Dichtung noch zwei weitere O-Ring-Dichtungen zur Abdichtung des Kupplungsinneren nach axial außen benötigt werden. Auch bei der Kupplung nach der GB 2 165 604 A ist die Abdichtung unbefriedigend.

Aufgabe der vorliegenden Erfindung ist es daher, eine Verbindungseinrichtung der eingangs genannten Art so auszugestalten, dass die Abdichtung der Verbindungseinrichtung bei einfachem Aufbau verbessert wird. Weiter soll mit einfachen Mitteln ein sicheres Herstellen und auch wieder Lösen der Steckverbindung gewährleistet sein.

Diese Aufgabe wird erfindungsgemäß mit einer Verbindungseinrichtung nach Anspruch 1 gelöst. Mit dem vorliegenden Erfindungsvorschlag wird damit eine besondere Vereinfachung des Aufbaus erreicht, welche insbesondere dann zum Tragen kommt, wenn auch die stirnseitig der Klemmhülse angeordnete Dichtung entfällt und das Aufspreizen mit Hilfe aufeinander wirkender Metallflächen geschieht.

Wenn der Kupplungskörper stirnseitig der Klemmhülse eine zum Aussparungseingang hin radial abfallende zweite Schräge aufweist, welche beim Einschieben der Klemmhülse aus der axial äußeren Arretierungslage in die axial innere Ausgangslage mit dem stirnseitigen Ende der wenigstens einen Arretierungszunge als Auflaufschräge zusammenwirkt, um diese radial zu spreizen.

Erfindungsgemäß wirken beim Aufspreizvorgang damit mechanisch Metallflächen aufeinander, welche den Aufspreizvorgang sicher und zuverlässig bestimmen. Überraschenderweise hat sich gezeigt, dass auf die nach dem Stand der Technik gemäß Fig. 1 und gemäß EP 1 143 185 A1 für notwendig gehaltene O-Ring-Dichtung stirnseitig der Klemmhülse verzichtet werden kann, wodurch zu der verbesserte Funktionsfähigkeit der erfindungsgemäßen Verbindungseinrichtung auch noch dieses Bauteil eingespart wird.

Das Aufspreizen der Arretierungszungen zum Zweck des Lösens der Steckverbindung kann dadurch noch weiter verbessert werden, dass das stirnseitige Ende der wenigstens einen Arretierungszunge eine mit der zweiten Schräge des Kupplungskörpers zusammen arbeitende gleich gerichtete Zungenschräge aufweist.

Für den Fall einer zusätzlichen notwendigen Abdichtung kann die Klemmhülse benachbart des Aussparungseingangs des Kupplungskörpers gegen die Innenwandfläche des Kupplungskörpers und/oder die Außenwandfläche des Rohres, z. B. mittels zweier O-Ring-Dichtungen, abgedichtet sein.

Zum Zweck der zuverlässigen Arretierung kann es ferner von Vorteil sein, dass die wenigstens eine Arretierungszunge auf ihrer der Außenwandfläche des Rohres zugewandten Seite mit einer scharfen Kante versehen ist.

In einfacher Ausgestaltung des Kupplungsstückes ist die erste Schräge von einer an der Innenwandfläche des Kupplungskörpers umlaufenden Ringwulst ausgebildet.

Von besonderem Vorteil für eine zuverlässige Arretierung und Abdichtung ist es, wenn zwei oder mehrere Arretierungszungen über den Umfang der Klemmhülse gleichmäßig verteilt angeordnet sind.

Um die Klemmhülse einfacher aus der axial äußeren Arretierungslage in die axial innere Ausgangslage in Richtung des Aussparungsinneren drücken zu können, ist die Klemmhülse zweckmäßigerweise an ihrem äußeren Ende mit einem Umfangsflansch ausgestattet.

Damit der Betätigungsabschnitt in der Aussparung des Kupplungskörpers gehalten wird, kann ersterer an seinem axial inneren Ende wenigstens eine radial verlagerbare Rastzunge aufweisen, welche mit einem nach radial außen weisenden Vorsprung in eine nach radial innen offene, z. B. als Umfangsnut ausgebildete Nut in der Innenwandfläche des Kupplungskörpers einrastet.

Dabei hat die Umfangsnut vorzugsweise eine Breite, welche eine axiale Verschiebung des Betätigungsabschnittes in solchem Maße zulässt, dass der Funktionsabschnitt zwischen seiner axial inneren Ausgangslage und seiner axial äu-ßeren Arretierungslage hin und her verschiebbar ist.

Vorteilhafterweise sind für einen zuverlässigen Sitz des Betätigungsabschnittes in der Aussparung des Kupplungskörpers zwei oder mehrere Rastzungen über den Umfang des Betätigungsabschnittes gleichmäßig verteilt angeordnet.

Im Rahmen dieses Erfindungsgedankens wird ferner vorgeschlagen, den Funktionsabschnitt aus Metall und den Betätigungsabschnitt aus einem elastisch nachgiebigen Material, wie Kunststoff, zu fertigen, so dass den Rastzungen die erforderliche Federelastizität zugeteilt werden kann. Bei dieser Ausführung der Erfindung kann der Umfangsflansch an dem Betätigungsabschnitt vorgesehen sein, so dass ein einfaches Verschieben von Betätigungsabschnitt,

O-Ring-Dichtung und Arretierungsabschnitt die Klemmhülse aus der axial äußeren Arretierungslage in die axial innere Ausgangslage (Freigabelage) möglich ist.

Weitere Ziele, Merkmale, Vorteile und Anwendungsmögtichkeiten ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: im Längsschnitt eine dem Stand der Technik angehörende Verbindungseinrichtung, von welcher die Erfindung ausgeht,
- Fig.2: teilweise geschnitten, ein anderes Ausführungsbeispiel einer dem Stand der Technik angehörenden Verbindungseinrichtung, und
- Fig. 3: ein Ausführungsbeispiel der Erfindung.

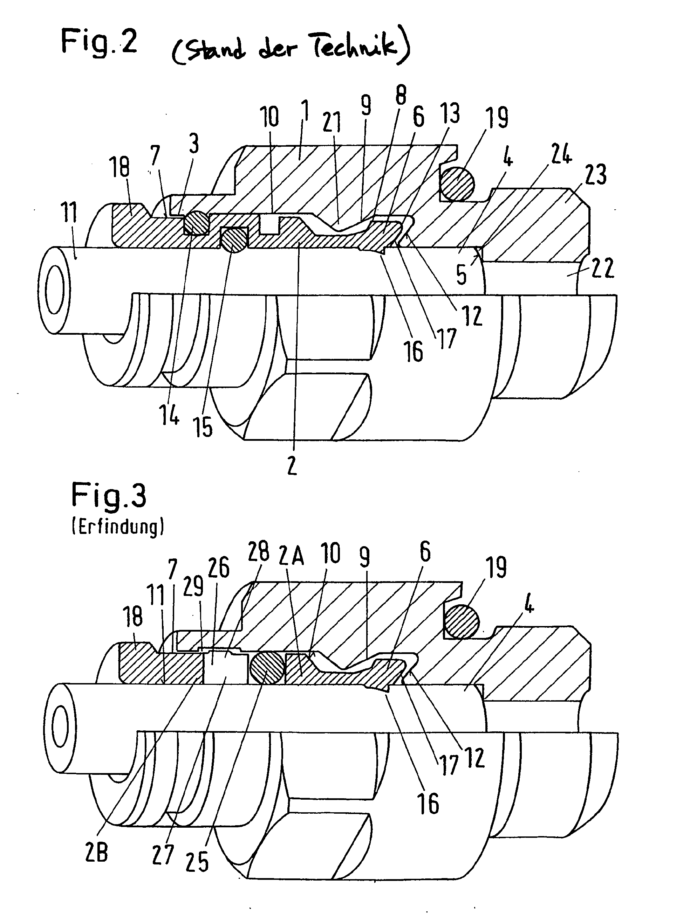

Nachfolgend wird die Erfindung in ihren verschiedenen Aspekten anhand der in Fig. 3 dargestellten Verbindungseinrichtung näher erläutert. Vorausgeschickt sei, dass in Fig. 1 und 2 gleiche Bezugszeichen für entsprechende Teile der aus dem Stand der Technik bekannten Verbindungseinrichtungen verwendet sind.

Die Verbindungseinrichtung gemäß Fig. 2 dient der Steckverbindung eines Rohres 4 oder dgl. Fluidleitung mit einem vorzugsweise Metallenen Kupplungskörper 1 derart, dass durch die Verbindungseinrichtung ein Fluid, also ein gasförmiges oder flüssiges Medium, hindurchgeführt werden kann, ohne dass Leckagen auftreten. Der Kupplungskörper 1 hat eine im Wesentlichen zylindrische Aussparung 3, welche sich bis zu einem als Anschlag 5 für das Ende des Rohres 4 dienende Innenschulter erstreckt, an welche sich für den Durchgang des Fluides ein Kanalabschnitt 22 anschließt. Der Kanalabschnitt 22 durchquert dabei einen z. B. als Gewindestutzen ausgebildeten Anschlussstutzen 23.

Die Verbindungseinrichtung weist ferner eine ebenfalls vorzugsweise metallene Klemmhülse 2 auf, welche in die Aussparung 3 von dem Aussparungseingang 7 aus einsetzbar ist. Die Klemmhülse 2 hat an ihrem axial inneren Ende gleichmäßig über ihren Umfang verteilt bspw. durch (nicht sichtbare) achsparallele Schlitze voneinander getrennte ggf. federelastische Arretierungszungen 6, welche beim Einschieben mit ihren verbreiterten stirnseitigen Enden 13 unter radialem Einfedern an einem an der Innenwandfläche 10 des Kupplungskörpers ausgebildete Ringwulst 21 vorbeigeschoben werden können, bis die erweiterten stirnseitigen Enden 13 in einer Erweiterung hinter einer in Richtung des Aussparungseinganges 7 radial abfallenden umlaufenden Schräge 9 zu liegen kommen. So bilden Kupplungskörper 1 und Klemmhülse 2 eine nur unter Kraftanwendung lösbare Einheit. Das Ende des Rohres 4 kann dann in die zylindrische Aussparung der Klemmhülse 2 bis zu dem Anschlag 5 des Kupplungskörpers 1 eingeschoben werden. Bei Fluiddruckaufbau in der Verbindungseinrichtung wird das Ende des Rohres 4 aus der axial inneren Ausgangslage an dem Anschlag 5 geringfügig in Richtung des Aussparungseingangs 7 bis in eine in Fig. 2 dargestellte axial äußere Arretierungslage verschoben, in welcher ein Spalt 24 zwischen der Stirnseite des Endes des Rohres 4 und dem Anschlag 5 besteht. Das Rohr 4 nimmt dabei die Klemmhülse 2 mit, wodurch die Außenseite 8 der erweiterten stirnseitigen Enden 13 der Arretierungszugen 6 unter Zusammenwirkens mit der ersten Schräge 9 nach radial innen gedrückt werden und das Ende des Rohres 4 so fixieren. Zu diesem Zweck haben die Arretierungszungen 6 auf ihrer der Außenwandfläche 11 des Rohres 4 zugewandten Innenseite eine scharfe Kante 16.

Wie aus Fig. 2 ersichtlich, weist bei diesem Ausführungsbeispiel der Kupplungskörper 1 stirnseitig der Klemmhülse 2 eine zum Aussparungseingang 7 hin radial abfallende umlaufende zweite Schräge 12 auf, welche beim Einschieben der Klemmhülse aus der in Fig. 2 dargestellten axial äußeren Arretierungslage in die ursprünglich eingenommene axial innere Ausgangslage mit dem stirnseitigen Ende 13 der Arretierungszungen 6 als Auflaufschräge zusammenwirkt, um die Arretierungszungen 6 aufzuspreizen. Diese besondere Ausgestaltung wird zum einfachen Lösen der Steckverbindung genutzt. Fig. 2 zeigt ferner, dass zur Sicherung der Funktion die erweiterten stirnseitigen Enden 13 der Arretierungszungen 6 jeweils eine mit der zweiten umlaufenden Schräge 12 des Kupplungskörpers 1 zusammen arbeitende gleich gerichtete Zungenschräge 17 aufweisen. Man steht im Vergleich zu Fig. 1, dass der vorgesehene stirnseitige Dichtungsring 20 entfallen ist.

Dagegen kann zur eingangsseitigen Abdichtung die Klemmhülse 2 benachbart dem Aussparungseingang 7 des Kupplungskörpers 2 gegen die Innenwandfläche 10 des Kupplungskörpers 1 und/oder die Außenwandfläche 11 des Rohres 4, z. B. mittels jeweiliger O-Ring-Dichtungen 14, 15, abgedichtet sein. Hierdurch wird ein Eindringen von Feuchtigkeit und Schmutz von außen und ein Austreten von Fluid aus der. Verbindungseinrichtung nach außen zusätzlich vermieden.

Ein am äußeren Ende der Klemmhülse 2 vorgesehener Umfangsflansch 18 erleichtert das Einschieben der Klemmhülse. 2 in die Aussparung 3 aus der in Fig. 2 dargestellten axial äußeren Arretierlage nach innen in die axial innere Ausgangslage, in welcher das Ende des Rohres 4 von den Arretierzungen 6 wieder frei gegeben ist.

Bei der in Fig. 3 dargestellten Verbindungseinrichtung ist nämlich die Klemmhülse 2 in zwei axial voneinander getrennte Abschnitte geteilt, und zwar in einen axial inneren Funktionsabschnitt 2A und einen axial äußeren Betätigungsabschnitt 2B. Dabei übt der Funktionsabschnitt mit den Arretierungszungen 6 die Arretierungsfunktion und Freigabefunktion aus, während der Betätigungsabschnitt 2B dem axialen Verschieben beider Abschnitte 2A, 2B aus der in Fig. 3 dargestellten axial äußeren Arretierungslage in die axial innere Ausgangslage dient, in welcher das Rohr 4 von den Arretierungszungen 6. wieder freigegeben ist. Zwischen den einander zugekehrten Stirnseiten von Funktionsabschnitt 2A und Betätigungsabschnitt 2B ist eine als O-Ring-Dichtung 25 ausgebildete Umfangsdichtung angeordnet, welche nach radial außen gegen die Innenwandfläche 10 des Kupplungskörpers 1 und nach radial innen gegen die Außenwandfläche 11 des Rohres 4 abdichtet. Die O-Ring-Dichtung 25 liegt damit verhältnismäßig nahe an dem Aussparungseingang 7 und axial außerhalb den möglichen Kratzern, welche an scharfen Kanten 16 der Arretierungszungen 6 in der Außenwandfläche des Rohres 4 entstehen können. Die Abdichtung gegen Eindringen von Feuchtigkeit und Schmutz einerseits und gegen Leckagen des Fluides nach außen ist damit zuverlässig gewährleistet, obgleich nur eine einzige O-Ring-Dichtung-25. benötigt wird.

Der Betätigungsabschnitt 2B weist an seinem axial inneren Ende über den Umfang gleichmäßig verteilt radial verlagerbare Rastzungen 26 auf, welche durch axiale Schlitze 27 voneinander getrennt sind. Die vorzugsweise federelastischen Rastzungen 26 können mit einem nach radial außen weisenden Vorsprung 28 in eine nach innen offene Umfangsnut 29 in der Innenwandfläche 10 des Kupplungskörpers 1 einrasten.

Dabei hat die Umfangsnut 29 eine Breite, welche ein axiale Verschiebung des Betätigungsabschnittes 2B in solchem Maße zulässt, dass der Funktionsabschnitt 2A zwischen seiner axial inneren Ausgangslage und seiner axial äußeren Arretierungslage verschiebbar ist und umgekehrt.

Bei dieser Ausführungsform kann der Funktionsabschnitt 2A aus Metall und der Betätigungasbschnitt 2B aus einem elastisch nachgiebigen Material, wie Kunststoff, bestehen. Die metallene Ausführung des Funktionsabschnittes 2A gewährleistet die zuverlässige Arretierungs- und Lösefunktion der Rastzungen 6, während der Betätigungsabschnitt 2B lediglich der Betätigungsfunktion dient und nicht verloren gehen kann. Wie in Fig. 3 dargestellt, ist in diesem Fall der Umfangsflansch 18 an dem Betätigungsabschnitt 2B vorgesehen.

### Bezugszeichenliste:

- 1: Kupplungskörper
- 2: Klemmhülse
- 2A: Funktionsabschnitt
- 2B: Betätigungsabschnitt
- 3: Aussparung
- 4: Rohr
- 5: Anschlag
- 6: Arretierungszunge(n)
- 7: Aussparungseingang
- 8: Außenseite
- 9: erste Schräge
- 10: Innenwandfläche des
Kupplungskörpers 1
- 11: Außenwandfläche des Rohrs 4
- 12: zweite Schräge
- 13: stirnseitiges Ende
- 14: äußere O-Ring-Dichtung
- 15: innere O-Ring-Dichtung
- 16: Kante
- 17: Zungenschräge
- 18: Umfangsflansch
- 19: O-Ring-Dichtung
- 20: Dichtungsring
- 21: Ringwulst
- 22: Kantenabschnitt
- 23: Anschlussstutzen
- 24: Spalt
- 25: O-Ring-Dichtung
- 26: Rastzunge(n)
- 27: Axialschlitze
- 28: Vorsprung
- 29: Umfangsnut

## Patentansprüche

1. Verbindungseinrichtung für ein Rohr oder dgl. Fluidleitung, mit einem Kupplungskörper (1) und einer Klemmhülse (2), welche in eine im Wesentlichen zylindrische Aussparung (3) des Kupplungskörpers (1) in eine axial innere Ausgangslage einsetzbar und in welche, z. B. nach dem Einsetzen in die Aussparung (3), ein Ende des anzuschließenden Rohres (4), z. B. bis zu einem stirnseitigen Anschlag (5) des Kupplungskörpers (1), einschiebbar ist, wobei die Klemmhülse (2) an ihrem inneren Ende wenigstens eine radial verlagerbare Arretierzunge (6) aufweist, welche bei einem Zurückschieben des Rohres (4) und damit der Klemmhülse (2) in Richtung des Aussparungseingangs (7) z. B. unter dem sich in der Rohrkupplung aufbauenden Druck bis in eine axial äußere Arretierungslage durch Zusammenwirkung der Außenseite (8) der Arretierungszunge (6) mit einer ersten in Richtung des Aussparungseingangs (7) radial abfallenden Schräge (9) der Innenwandfläche (10) des Kupplungskörpers (1) radial nach innen und mit ihrer Innenseite in Eingriff mit der Außenwandfläche (11) des Rohres (4) drückbar ist, wobei die Klemmhülse (2) in einen axial inneren Funktionsabschnitt (2A) mit der wenigstens einen Arretierungszunge (6), welche bei dessen Einschieben aus der axial äußeren Arretierungslage in die axial innere Ausgangslage radial nach außen gespreizt wird, und einen axial äußeren Betätigungsabschnitt (2B) unterteilt ist, **dadurch gekennzeichnet, dass** zwischen den einander zugekehrten Stirnseiten von Funktionsabschnitt (2A) und Betätigungsabschnitt (28) eine z. B. als O-Ring-Dichtung (25) ausgebildete Dichtung angeordnet ist, welche nach radial außen gegen die Innenwandfläche (10) des Kupplungskörpers (1) und nach radial innen gegen die Außenwandfläche (11) des Rohres (4) abdichtet.

2. Verbindungseinrichtung nach Anspruch 1, **dadurch gekennzeichnet, dass** der Kupplungskörper (1) stirnseitig der Klemmhülse (2) eine zum Aussparungseingang (7) hin radial abfallende zweite Schräge (12) aufweist, welche beim Einschieben der Klemmhülse (2) aus der axial äußeren Arretierungslage in die axial innere Ausgangslage mit dem stirnseitigen Ende (13) der wenigstens einen Arretierungszunge (6) als Auflaufschräge zusammenwirkt, um diese nach radial außen zu spreizen.

3. Verbindungseinrichtung nach Anspruch 1 oder 2, **dadurch gekennzeichnet, dass** das stirnseitige Ende (13) der wenigstens einen Arretierungszunge (6) eine mit der zweiten Schräge (12) des Kupplungskörpers (1) zusammen arbeitende gleich gerichtete Zungenschräge (17) aufweist.

4. Verbindungseinrichtung nach einem der Ansprüche 1 bis 3, **dadurch gekennzeichnet, dass** die Klemmhülse (2) benachbart des Aussparungseingangs (7) des Kupplungskörpers (1) gegen die Innenwandfläche (10) des Kupplungskörpers (1) und/oder die Außenwandfläche (11) des Rohres (4) abgedichtet (14, 15) ist.

5. Verbindungseinrichtung nach einem der vorhergehenden Ansprüche, **dadurch gekennzeichnet, dass** die wenigstens eine Arretierungszunge (6) auf ihrer der Außenwandfläche (11) des Rohres (4) zugewandten Seite mit einer scharfen Kante (16) versehen ist.

6. Verbindungseinrichtung nach einem der vorhergehenden Ansprüche, **dadurch gekennzeichnet, dass** die erste Schräge (9) von einer an der Innenwandfläche (10) des Kupplungskörpers (1) umlaufenden Ringwulst (21) ausgebildet ist.

7. Verbindungseinrichtung nach einem der vorhergehenden Ansprüche, **dadurch gekennzeichnet, dass** zwei oder mehrere Arretierungszungen (6) über den Umfang der Klemmhülse (2) gleichmäßig verteilt angeordnet sind.

8. Verbindungseinrichtung nach einem der vorhergehenden Ansprüche, **dadurch gekennzeichnet, dass** die Klemmhülse (2) an ihrem äußeren Ende mit einem Umfangsflansch (18) ausgestattet ist.

9. Verbindungseinrichtung nach einem der vorhergehenden Ansprüche, **dadurch gekennzeichnet, dass** der Betätigungsabschnitt (2B) an seinem axial inneren Ende wenigstens eine radial verlagerbare Rastzunge (26) aufweist, welche mit einem nach radial außen weisenden Vorsprung (28) in eine nach innen offene z. B. als Umfangsnut (29) ausgebildete Nut in der Innenwandfläche (10) des Kupplungskörpers (1) einrastet.

10. Verbindungseinrichtung nach Anspruch 9, **dadurch gekennzeichnet, dass** die Umfangsnut (29) eine Breite hat, welche eine axiale Verschiebung des Betätigungsabschnittes (2B) in solchem Maß zulässt, dass der Funktionsabschnitt (2A) zwischen seiner axial inneren Ausgangslage und seiner axial äußeren Arretierungslage hin und her verschiebbar ist.

11. Verbindungseinrichtung nach einem der vorhergehenden Ansprüche, **dadurch gekennzeichnet, dass** zwei oder mehrere Rastzungen (26) über den Umfang des Betätigungsabschnitts (2B) gleichmäßig verteilt angeordnet sind.

12. Verbindungseinrichtung nach einem der vorhergehenden Ansprüche, **dadurch gekennzeichnet, dass** der Funktionsabschnitt (2A) aus Metall und der Betätigungsabschnitt (2B) aus einem elastisch nachgiebigen Material, wie Kunststoff, besteht.

13. Verbindungseinrichtung nach einem der vorhergehenden Ansprüche, **dadurch gekennzeichnet, dass** der Umfangsflansch (18) an dem Betätigungsabschnitt (2B) vorgesehen ist.

## Claims

1. Connecting device for a pipe or similar fluid conduit, having a coupling member (1) and a clamping collar (2) which can be inserted into an essentially cylindrical recess (3) of the coupling member (1) into an axially inner initial position and into which, e.g. after the insertion into the recess (3), an end of the pipe (4) to be connected can be pushed, e.g. up to a frontal stop (5) of the coupling member (1), the clamping collar (2), at its inner end, having at least one radially displaceable locking tongue (6) which, when the pipe (4) and thus the clamping collar (2) are pushed back in the direction of the recess inlet (7) right into an axially outer locking position, e.g. under the pressure building up in the pipe coupling, can be pressed radially inward and with its inside in engagement with the outer wall surface (11) of the pipe (4) by interaction of the outside (8) of the locking tongue (6) with a first slope (9), falling away radially in the direction of the recess inlet (7), of the inner wall surface (10) of the coupling member (1), the clamping collar (2) being subdivided into an axially inner functional section (2A) having the at least one locking tongue (6), which is spread radially outward when said functional section (2A) is pushed from the axially outer locking position into the axially inner initial position, and into an axially outer actuating section (2B), **characterized in that** a seal, designed as an O-ring seal (25) for example, is arranged between the front faces, facing one another, of functional section (2A) and actuating section (2B), this seal providing for sealing radially on the outside relative to the inner wall surface (10) of the coupling member (1) and radially on the inside relative to the outer wall surface (11) of the pipe (4).

2. Connecting device according to claim 1, **characterized in that** the coupling member (1), at the front face of the clamping collar (2), has a second slope (12) which falls away radially in the direction of the recess inlet (7) and which, when the clamping collar (2) is pushed from the axially outer locking position into the axially inner initial position, interacts as abutting slop with the frontal end (13) of the at least one locking tongue (6) in order to spread the latter radially outward.

3. Connecting device according to claims 1 or 2, **characterized in that** the frontal end (13) of the at least one locking tongue (6) has a tongue slope (17) acting in the same direction and interacting with the second slope (12) of the coupling member (1).

4. Connecting device according to one of claims 1 to 3, **characterized in that** the clamping collar (2) is sealed off (14, 15) adjacent to the recess inlet (7) of the coupling member (1) relative to the inner wall surface (10) of the coupling member (1) and/or the outer wall surface (11) of the pipe (4).

5. Connecting device according to one of the preceding claims, **characterized in that** the at least one locking tongue (6) is provided with a sharp edge (16) on its side facing the outer wall surface (11) of the pipe (4).

6. Connecting device according to one of the preceding claims, **characterized in that** the first slope (9) is formed by an annular bead (21) which runs around the inner wall surface (10) of the coupling member (1).

7. Connecting device according to one of the preceding claims, **characterized in that** two or more locking tongues (6) are arranged in a uniformly distributed manner over the circumference of the clamping collar (2).

8. Connecting device according to one of the preceding claims, **characterized in that** the clamping collar (2) is provided with a circumferential flange (18) at its outer end.

9. Connecting device according to one of the preceding claims, **characterized in that** at its axially inner end, the actuating section (2B) has at least one radially displaceable latching tongue (26) which with a projection (28) which points radially outward, latches in place in a groove in the inner wall surface (10) of the coupling member (1), this groove being open inward and being designed, for example, as circumferential groove (29).

10. Connecting device according to claim 9, **characterized in that** the circumferential groove (29) has a width which permits an axial displacement of the actuating section (2B) to such an extent that the functional section (2A) can be displaced back and forth between its axially inner initial position and its axially outer locking position.

11. Connecting device according to one of the preceding claims, **characterized in that** two or more latching tongues (26) are arranged in a uniformly distributed manner over the circumference of the actuating section (2B).

12. Connecting device according to one of the preceding claims, **characterized in that** the functional section (2A) is made of metal and the actuating section (2B) is made of an elastically resilient material, such as plastic.

13. Connecting device according to one of the preceding claims, **characterized in that** the circumferential flange (18) is provided on the actuating section (2B).

## Revendications

1. Dispositif de raccordement destiné à un tube ou une conduite de fluide similaire, comportant un corps d'accouplement (1) et une douille de serrage (2), qui peut être insérée dans un évidement (3) sensiblement cylindrique du corps d'accouplement (1) afin de parvenir à une position initiale axialement interne et dans laquelle, par exemple après l'insertion dans l'évidement (3), une extrémité du tube (4) devant être raccordé peut être poussée, par exemple jusqu'à une butée du côté frontal (5) du corps d'accouplement (1), la douille de serrage (2) présentant, au niveau de son extrémité interne, au moins une languette de blocage (6) pouvant se déplacer radialement, laquelle, en cas de repoussement du tube (4) et donc la douille de serrage (2) en direction de l'entrée de l'évidement (7), par exemple sous l'effet de la pression qui s'établit dans l'accouplement du tube, peut être poussée radialement vers l'intérieur jusqu'à une position de blocage axialement externe, grâce à l'action conjointe entre la face externe (8) de la languette de blocage (6) et une première rampe (9) de la surface de paroi interne (10) du corps d'accouplement (1), laquelle rampe diminue radialement dans la direction de l'entrée de l'évidement (7), et, avec sa face interne, peut être appuyée pour s'engager avec la surface de paroi externe (11) du tube (4), la douille de serrage (2) étant subdivisée en une section fonctionnelle axialement interne (2A) avec la au moins une languette de blocage (6) qui, lorsqu'on la pousse depuis la position de blocage axialement externe dans la position initiale axialement interne, s'écarte radialement vers l'extérieur, et une section d'actionnement axialement externe (2B), **caractérisé en ce que,** entre les faces frontales orientées l'une vers l'autre de la section fonctionnelle (2A) et de la section d'actionnement (2B), est disposé un joint d'étanchéité configuré par exemple sous la forme d'un joint torique (25), qui étanchéifie radialement vers l'extérieur par rapport à la surface du paroi interne (10) du corps d'accouplement (1) et radialement vers l'intérieur par rapport à la surface de paroi externe (11) du tube (4).

2. Dispositif de raccordement selon la revendication 1, **caractérisé en ce que** le corps d'accouplement (1) présente, du côté frontal de la douille de serrage (2), une deuxième rampe (12) qui diminue radialement en direction de l'entrée de l'évidement (7) qui, lorsque la douille de serrage (2) est poussé depuis la position de blocage axialement externe vers la position initiale axialement interne, coopère en tant que plan incliné avec l'extrémité frontale (13) de la au moins une languette de blocage (6), afin d'écarter celle-ci radialement vers l'extérieur.

3. Dispositif de raccordement selon la revendication 1 ou 2, **caractérisé en ce que** l'extrémité frontale (13) de la au moins une languette de blocage (6) présente une rampe de languette (17) agissant conjointement avec la deuxième rampe (12) du corps d'accouplement (1) et dirigée de la même manière.

4. Dispositif de raccordement selon l'une des revendications 1 à 3, **caractérisé en ce que** la douille de serrage (2) est étanchéifiée (14, 15), à proximité de l'entrée d'évidement (7) du corps d'accouplement (1), par rapport à la surface de paroi interne (10) du corps d'accouplement (1) et/ou par rapport à la surface du paroi externe (11) du tube (4).

5. Dispositif de raccordement selon l'une des revendications précédentes, **caractérisé en ce que** la au moins une languette de blocage (6) est dotée, sur sa face orientée vers la surface de paroi externe (11) du tube (4), d'un bord acéré (16).

6. Dispositif de raccordement selon l'une des revendications précédentes, **caractérisé en ce que** la première rampe (9) est formée par un bourrelet annulaire (21) s'étendant sur la surface de paroi interne (10) du corps d'accouplement (1).

7. Dispositif de raccordement selon l'une des revendications précédentes, **caractérisé en ce que** deux ou plusieurs languettes de blocage (6) sont disposées sur toute la périphérie de la douille de serrage (2) en étant réparties régulièrement.

8. Dispositif de raccordement selon l'une des revendications précédentes, **caractérisé en ce que** la douille de serrage (2), au niveau de son extrémité externe, est équipée d'une bride périphérique (18).

9. Dispositif de raccordement selon l'une des revendications précédentes, **caractérisé en ce que** la section d'actionnement (2B) présente, au niveau de son extrémité axialement interne, au moins une languette d'encliquetage (26) pouvant se déplacer radialement, laquelle s'engage avec une saillie (28) orientée radialement vers l'extérieur dans une rainure ouverte vers l'intérieure ménagée dans la surface de paroi interne (10) du corps d'accouplement (1), par exemple sous la forme de rainure périphérique (29).

10. Dispositif de raccordement selon la revendication 9, **caractérisé en ce que** la rainure périphérique (29) a une largeur qui permet un déplacement axial de la section d'actionnement (2B) à un degré tel que la section fonctionnelle (2A) peut être déplacer selon un mouvement de va-et-vient entre sa position initiale axialement interne et sa position de blocage axialement externe.

11. Dispositif de raccordement selon l'une des revendications précédentes, **caractérisé en ce que** deux languettes d'encliquetage (26) ou plus sont disposées sur la périphérique de la section d'actionnement (2B) en étant réparties régulièrement.

12. Dispositif de raccordement selon l'une des revendications précédentes, **caractérisé en ce que** la section fonctionnelle (2A) est réalisée en métal et la section d'actionnement (2B) est réalisée dans une matière déformable élastiquement, telle qu'une matière plastique.

13. Dispositif de raccordement selon l'une des revendications précédentes, **caractérisé en ce que** la bride périphérique (18) est prévue sur la section d'actionnement (2B).
